# EUROPEAN PATENT APPLICATION

(11) **EP 1 628 420 A2**
(43) Date of publication of application: **22.02.2006**
(21) Application number: 05291752.3
(22) Date of filing: 18.08.2005
(51) Int. Cl.: H04H 1/00

(54) **Mobile broadcast receiver for decoding broadcast services selected by the user**

(30) Priority: 18.08.2004 KR 2004065078
(71) Applicant: LG Electronics, Inc., Seoul 150-875 (KR)
(72) Inventor: Kim, Yoon Jung c/o SAT Group, Seoul (KR)
(74) Representative: Loisel, Bertrand

(57) **Abstract**

A mobile broadcast receiver and a method for decoding a broadcast service are provided. According to an aspect of the invention, the mobile broadcast receiver includes a receiver to receive a fast information channel (FIC) and a main service channel (MSC), and an FIC decoder. The FIC decoder is configured to analyze fast information group (FIG) information of a fast information block (FIB) contained in the FIC, to extract information associated with a user-selected service and information associated with at least one service component of the user-selected service, and to filter only the at least one service component of the user-selected service based on the extracted information.

## Description

This application claims the priority benefit of Korean Patent Application No. 10-2004-0065078 filed on August 18, 2004 in Republic of Korea, which is hereby incorporated by reference as if fully set forth herein.

### BACKGROUND OF THE INVENTION

### Field of the Invention

The present invention relates to a mobile broadcast receiver, and more particularly to a method for decoding a broadcast service in a terrestrial mobile broadcast receiver.

### Discussion of the Related Art

Recently, as high-quality digital audio devices such as a Compact Disc (CD) or a Digital Versatile Disc (DVD) have rapidly come into widespread use throughout the world, demands of listeners who listen to digital broadcast data requiring high-quality audio data (i.e., high-quality sound) have also been rapidly increased. Therefore, in order to obviate a limitation in improving the quality of audio data for use in a typical Frequency Modulation (FM) broadcast service, a Digital Audio Broadcasting (DAB) system has been widely used in many countries, for example, the United States, Europe, Canada, etc.

The DAB system provides a user with high-quality audio data using a technology different from those of typical Amplitude Modulation (AM) or FM broadcast systems, has superior reception ability while in motion using this technology, and can transmit digital data such as video or audio data at high speed. In recent times, a variety of multimedia services including both audio data and video data have been generally called a Digital Multimedia Broadcasting (DMB) service. In other words, the DMB service can provide users with high-quality audio data (e.g., data of CD) and high-quality video data, and can also provide the users with a superior fixed reception quality or a mobile reception quality.

The Eureka-147 system has been developed for the above-mentioned DAB service, and has been considered to provide a terrestrial DMB capable of providing users with small-sized moving images. The Eureka-147 system includes a packet mode and a stream mode, such that its configuration can be extended to transmit multimedia data according to individual modes. Therefore, the multimedia data can be transmitted to a destination on the condition that the conventional terrestrial DAB system is slightly changed to another configuration.

The above-mentioned Eureka-147 system can construct a single broadcast service composed of a plurality of service components, can multiplex a plurality of broadcast services into an ensemble, and can transmit the multiplexed result via a specific frequency band of about 20MHz.

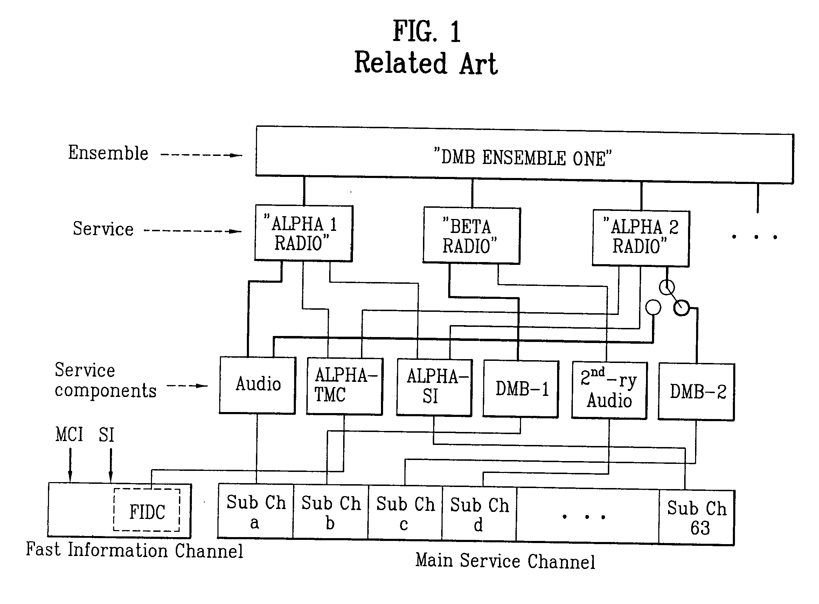

The above-mentioned configuration of a DMB system according to a related art is shown in Figure 1.

Referring to Figure 1, a single service is composed of one or more service components, and a single ensemble is composed of one or more such services. In an example, the ensemble of Figure 1 is composed of at least three services: "ALPHA 1 RADIO", "BETA RADIO" and "ALPHA 2 RADIO". Each service is composed of two or three service components.

A service component is indicative of a variety of service components of a broadcast service, for example, video data, audio data, traffic information, or broadcast service information. The service corresponds to a broadcast, and a single service is composed of one or more service components. Individual sub-channels (e.g., Sub Ch a, Sub Ch b,..., Sub Ch 63) of a Main Service Channel (MSC) and a Fast Information Data Channel (FIDC) may be used as the above-mentioned service components.

The ensemble is modulated into another ensemble according to a predetermined method, and the modulated ensemble is generally transmitted via a single frequency band of 2MHz. The service component is connected to a sub-channel on a one-to-one basis. For the convenience of description, the service component, instead of the sub-channel, is mainly described in the present invention.

The above-mentioned Eureka-147 system also includes a Multiplex Configuration Information (MCI). The MCI indicates a service multiplexed into the ensemble, service components contained in individual services, and position information of the service components. The MCI and service information (SI) are carried on a Fast Information Channel (FIC) which includes the FIDC.

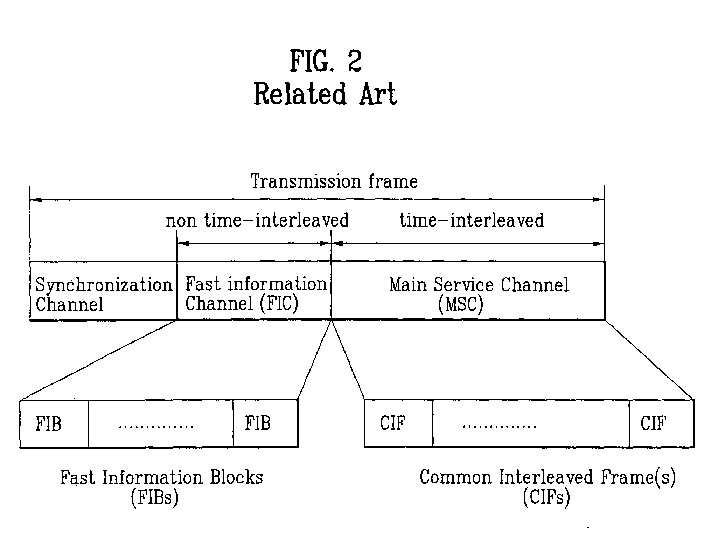

The Eureka-147 system repeatedly transmits data in frame units. A transmission frame according to a related art includes a synchronization channel, a FIC (Fast Information Channel), and a MSC (Main Service Channel) as shown in Figure 2.

The synchronization channel has a predetermined configuration to allow a DMB receiver to recognize an initial frame. A null symbol and a Phase Reference Symbol (PRS) for modulation/demodulation of DQPSK (Differential Quadrature Phase Shift Keying) are assigned to the synchronization channel.

The FIC includes a plurality of Fast Information Blocks (FIBs), and is adapted to transmit information for receiving a broadcast service. The MSC includes one or more CIFs (Common interleaved Frames), and is adapted to transmit a broadcast service including video data, audio data, and other data, etc.

The FIC includes specific data indicative of a structure of data received from the CIF contained in the MSC. Each CIF includes actual data, for example, video data, audio data, etc. The number of FIBs loaded on the FIC and the number of CIFS loaded on the MSC are changed according to a transmission mode. For example, if the transmission mode is set to "I", the FIC includes 12 FIBs, and the MSC includes 4 CIFs. The DMB receiver decodes data in CIF units, such that it can provide a user with video and audio services.

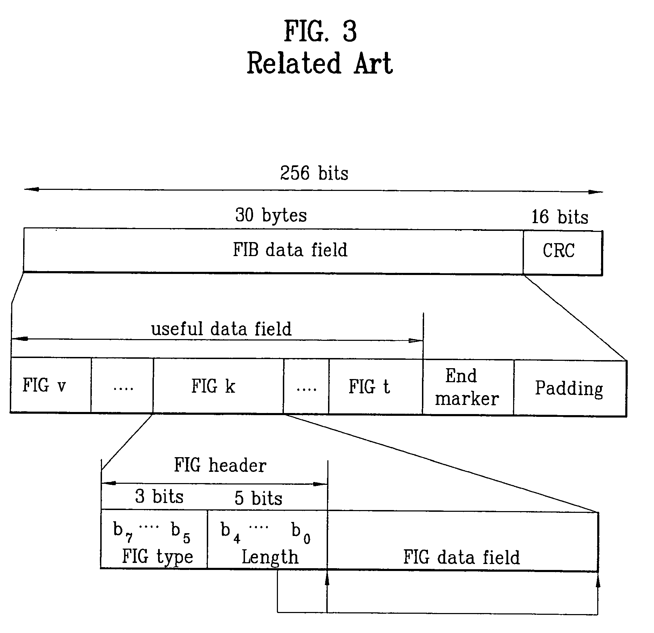

According to the related art, each FIB is composed of a plurality of Fast Information Groups (FIGs) as shown in Figure 3. A single FIB is composed of 256 bits. In this case, data can be received in the first 240 bits (i.e., 30 bytes) among the 256 bits. Therefore, the length of a FIB corresponds to 32 bytes including 30 bytes of a FIB data field and 2 bytes of a Cyclic Redundancy Check (CRC).

Each FIG received in the FIB is divided into a FIG header and a FIG data field. The FIG header can carry information on the type of the corresponding FIG and length. In this case, the above-mentioned FIG length is variable, but it must not exceed 30 bytes although it includes a header.

The following Table 1 shows a variety of FIGs.

[Table 1]

| FIG Type Number | FIG Type | FIG Application |
|---|---|---|
| 0 | 000 | MCI and part of SI |
| 1 | 001 | Labels, etc.(part of the SI) |
| 2 | 010 | Reserved |
| 3 | 011 | Reserved |
| 4 | 100 | Reserved |
| 5 | 101 | FIC Data Channel (FIDC) |
| 6 | 110 | Condition Access (CA) |
| 7 | 111 | In House (Expert for Length 31) |

Table 1 indicates a variety of information differently loaded according to FIG types. For instance, MCI (Multiplex Configuration Information) indicative of an ensemble structure, individual services, and service component information is set to a FIG type of zero (0).
Other Service Information (SI) is set to a FIG type of 1. FIDC is set to a FIG type of 5. CA information is set to a FIG type of 6.

As discussed above, the ensemble defined by the Eureka-147 system may have a variety of services multiplexed therein. Each service may have a plurality of service components. Data, which may be used as the above-mentioned service components, is transmitted via the FIC or the MSC. Ensemble configuration information, individual service configuration information, and service component - associated information are contained in the MCI. The MCI is loaded on the FIG(s) having the FIG type of 0 in the FIC, and is then transmitted to a destination. A single service may have a maximum of 12 service components, and the number of services contained in a single ensemble is not limited.

According to the related art, a FIC decoder in the DMB receiver must store and manage all kinds of information contained in an ensemble to provide a service in the ensemble.

For example, if the user selects a specific service of "BETA RADIO" contained in the ensemble structure shown in Figure 1, the FIC decoder must pre-recognize how sub-channels of the MSC are classified. Also, the FIC decoder must recognize not only sub-channel IDs of two service components (e.g., "DMB-1" and "2^{nd}-ry Audio") contained in the "BETA RADIO" service, but other information such as data type (i.e., DMB data and audio) of individual service components. The FIC decoder then transmits the DMB-1 data and secondary audio data to a TP (TransPort) decoder and an audio decoder according to the above-mentioned information.

In this case, in order to recognize the above-mentioned information, the FIC decoder must manage and process information associated with all services included in the ensemble. However, the number of services contained in an ensemble and an amount of information associated with the service components are numerous and limitless, such that the FIC decoder has difficulty in managing all the information associated with all the services contained in the ensemble.

### SUMMARY OF THE INVENTION

Accordingly, the present invention is directed to a mobile broadcast receiver and a method for decoding a broadcast service, which can decode/manage only information associated with a user-selected service among a plurality of services.

An object of the present invention is to provide a mobile broadcast receiver and a method for decoding a broadcast service, which overcome the limitations and the disadvantages associated with the

### related art.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile broadcast receiver according to an aspect of the invention comprises: a receiver for receiving a transmission frame including a synchronization channel, a Fast Information Channel (FIC), and a Main Service Channel (MSC), configuring the received transmission frame in the form of a stream, and generating the resultant stream; and an FIC decoder for analyzing Fast Information Group (FIG) information of a Fast Information Block (FIB) contained in the FIC from among a stream generated from the receiver, extracting information associated with a user-selected service and other information associated with service components of the user-selected service, filtering only service components of the user-selected service from among the stream using the extracted information, and transmitting the filtered result to a corresponding process block.

In another aspect of the present invention, there is a method for decoding a broadcast service of a mobile broadcast receiver, which receives a transmission frame composed of a synchronization channel, a Fast Information Channel (FIC), and a Main Service Channel (MSC), and decodes the received transmission frame, the method comprising the steps of: a) analyzing Fast Information Group (FIG) information of a Fast Information Block (FIB) contained in the FIC from among a received stream, and extracting information associated with a user-selected service and other information associated with service components of the user-selected service; and b) filtering only the service components of the user-selected service from among the stream using the extracted service and service component information, and decoding the filtered result.

According to an aspect of the present invention, there is provided a mobile broadcast receiver comprising: a receiver to receive a fast information channel (FIC) and a main service channel (MSC); and an FIC decoder to analyze fast information group (FIG) information of a fast information block (FIB) contained in the FIC, to extract information associated with a user-selected service and information associated with at least one service component of the user-selected service, and to filter only the at least one service component of the user-selected service based on the extracted information.

According to an aspect of the present invention, there is provided a method for decoding a broadcast service of a mobile broadcast receiver, which receives a fast information channel (FIC) and a main service channel (MSC), the method comprising: (a) analyzing fast information group (FIG) information of a fast information block (FIB) contained in the FIC, and extracting information associated with a user-selected service and information associated with at least one service component of the user-selected service; and (b) filtering only the at least one service component of the user-selected service based on the extracted information.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Figure 1 is a block diagram illustrating a DMB ensemble structure according to a related art;

Figure 2 is a configuration diagram of a DMB transmission frame according to a related art;

Figure 3 is a configuration diagram of an FIB structure shown in Figure 2 according to a related art;

Figure 4 is a flow chart illustrating operations of an FIC decoder in accordance with a preferred embodiment of the present invention;

Figure 5 is a configuration diagram of a specific field denoted by "FIG Type 0 field for extension 1" (0/1) contained in an FIB of an FIC shown in Figure 4 in accordance with a preferred embodiment of the present invention;

Figure 6 is a configuration diagram of a specific field denoted by "FIG Type 0 field for extension 2" (0/2) contained in an FIB of an FIC shown in Figure 4 in accordance with a preferred embodiment of the present invention;

Figure 7 is a configuration diagram of a specific field denoted by "FIG Type 0 field for extension 3" (0/3) contained in an FIB of an FIC shown in Figure 4 in accordance with a preferred embodiment of the present invention;

Figure 8 is a configuration diagram of a specific field denoted by "FIG Type 0 field for extension 4" (0/4) contained in an FIB of an FIC shown in Figure 4 in accordance with a preferred embodiment of the present invention;

Figure 9 is a configuration diagram of an FIDC contained in an FIB of an FIC shown in Figure 4 in accordance with a preferred embodiment of the present invention; and

Figure 10 is a block diagram illustrating a DMB receiver in accordance with a preferred embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

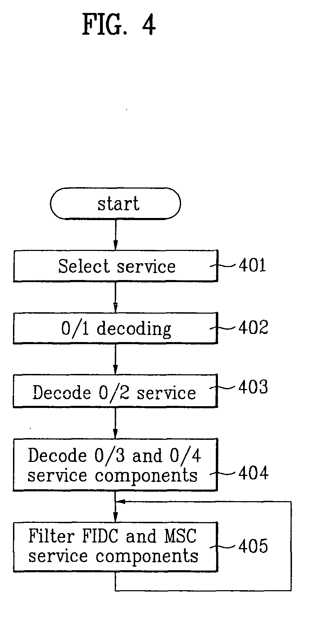

Figure 4 is a flow chart illustrating operations of an FIC decoder according to the present invention. Referring to Figure 4, the FIC decoder waits for a host to select one of the services contained in an ensemble at step 401. If the host selects one of the services, the FIB decoder decodes a specific field "FIG type 0 field for extension 1" (0/1) contained in a FIB, and analyzes a sub-channel structure (i.e., a service component) at step 402. If a specific field "FIG type 0 field for extension 2" (0/2) is enabled, the FIC decoder decodes only information associated with the selected service, and recognizes a structure of the selected service at step 403. Subsequently, if a field "FIG type 0 field for extension 3" (0/3) and another field "FIG type 0 field for extension 4" (0/4) are enabled, the FIC decoder decodes only information associated with the selected service component. These specific fields (0/1 to 0/4) can be contained in one same FIB or different FIBs of a FIC, and will be explained later in detail. Accordingly, the FIC decoder filters only a desired service component among the FIDC and the MSC using the above-mentioned decoded information, and transmits the filtered result to the next component block (e.g., a TP decoder) at step 405. In other words, the FIC decoder transmits a desired service component to the host according to the filtered data types, and transmits the same to a TP decoder and to an audio decoder and/or a video decoder.

Individual FIG types shown in Table 1 above can be extended according to individual types. For example, if a FIG type is set to zero (0), it can be extended to 32 FIG types (e.g., 32 extensions for FIG type 0). The number of currently-used FIG types (extensions) among the above 32 FIG types is set to 30. 30 FIG types are currently adapted to indicate configuration information of individual ensembles, a sub-channel content, and paging, etc.

In this case, the MCI indicating the ensemble structure information, individual services, and service component information is transmitted to a destination using a FIG type of zero (0) contained in the FIG (i.e., in a FIG which is identified as the FIG type 0).

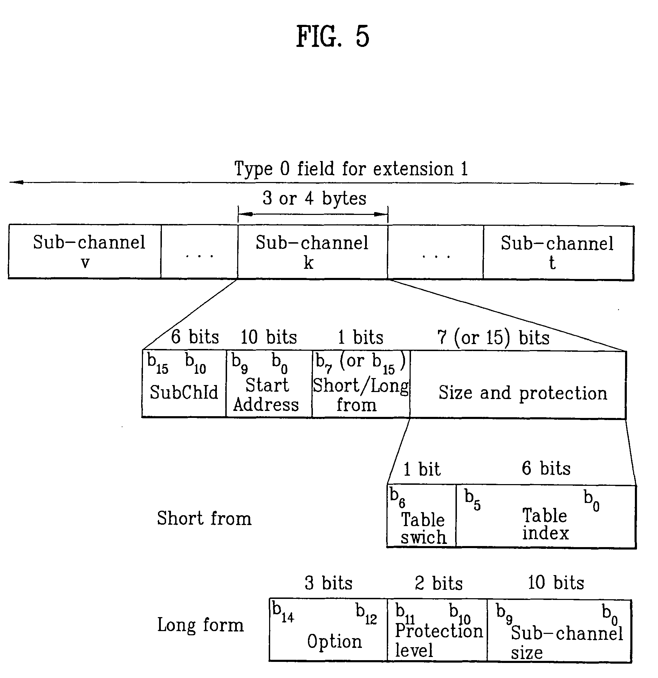

Figure 5 is a configuration diagram of a specific field denoted by "FIG type 0 field for extension 1" (0/1) indicative of sub-channel information (i.e., a service component), which is contained in a FIB of a FIC, according to the present invention. Referring to Figure 5, the FIC decoder analyzes information of the above-mentioned 0/1 structure, such that it recognizes how many sub-channels are present in the MSC, and also recognizes a start point depending upon individual sub-channel IDs (SubChID) and size information.

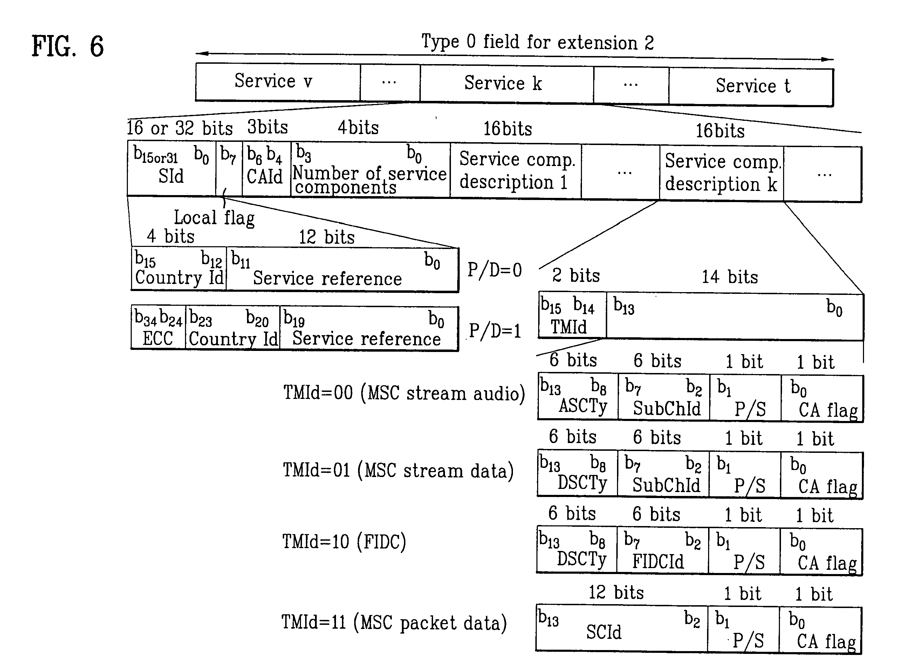

Figure 6 is a configuration diagram of a specific field denoted by "FIG type 0 field for extension 2" (0/2) indicative of service information, which is contained in a FIB of the FIC, according to the present invention. The number of service components of individual services and data type information of the individual service components can be recognized by examining the information in the "FIG type 0 field for extension 2". For example, in the 0/2 structure as shown in Figure 6, a "TMId" field of "00" (i.e., TMId=00) is indicative of audio data of a DAB, and "TMId" of "01" is indicative of a DMB data loading state. If "TMId" is set to "10", this means an FIDC, such that data is loaded via the FIC instead of the MSC. If "TMId" is set to "11", this means a packet data loading state.

Therefore, the FIC decoder may transmit service components to the host according to individual data types, may transmit them to an audio decoder, or may transmit them to a TP decoder.

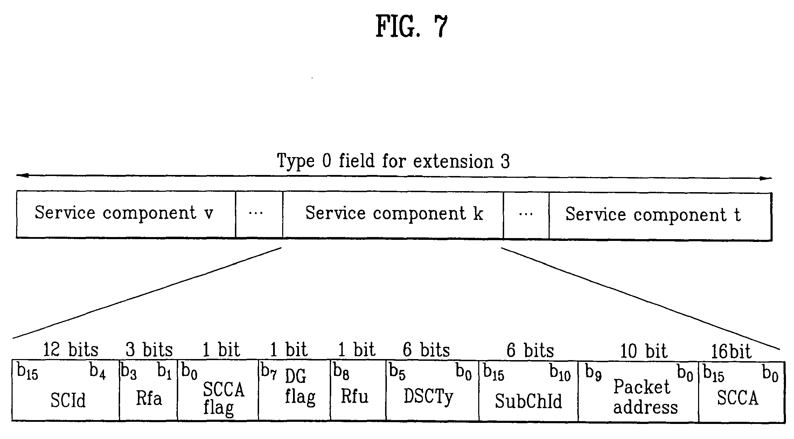

Figure 7 is a configuration diagram of a specific field denoted by "FIG type 0 field for extension 3" (0/3) indicative of information of a service component transmitted under a packet mode according to the present invention. This 0/3 structure or field is contained in a FIB of the FIC. If a current mode is determined to be a packet mode, the FIC decoder may not recognize a sub-channel ID (SubChId) of a corresponding service component in the field "FIG type 0 field for extension 2" (0/2), such that it must recognize the sub-channel ID by decoding the 0/3 field. Also, the FIC decoder may also recognize additional information other than the above-mentioned information as necessary.

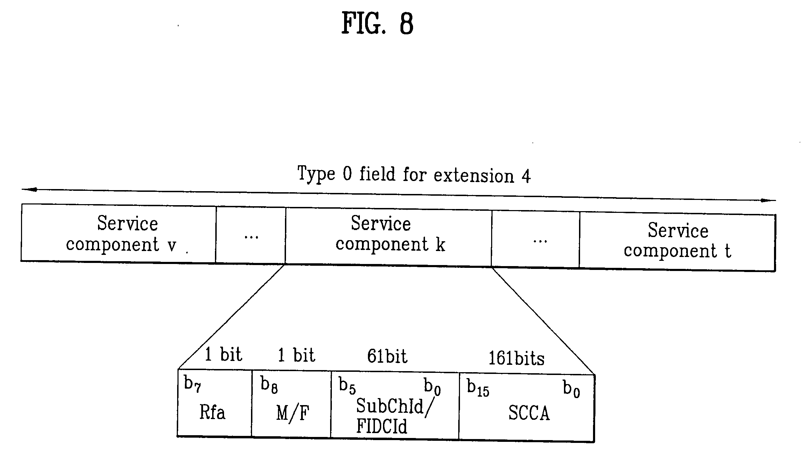

Figure 8 is a configuration diagram of a specific field denoted by "FIG Type 0 field for extension 4" contained in an FIB of the FIC, indicative of information of a service component transmitted under a stream mode, according to the present invention. A service component corresponding to a stream mode employs a SCCA to recognize CA information, such that it must decode the field "FIG Type 0 field for extension 4" (0/4).

In this manner, the FIC decoder decodes the MCI loaded via the above-mentioned 0/1, 0/2, 0/3, and 0/4 fields or structures, and can filter data loaded via the FIC and the MSC. In this case, the FIDC may be transmitted to the FIC.

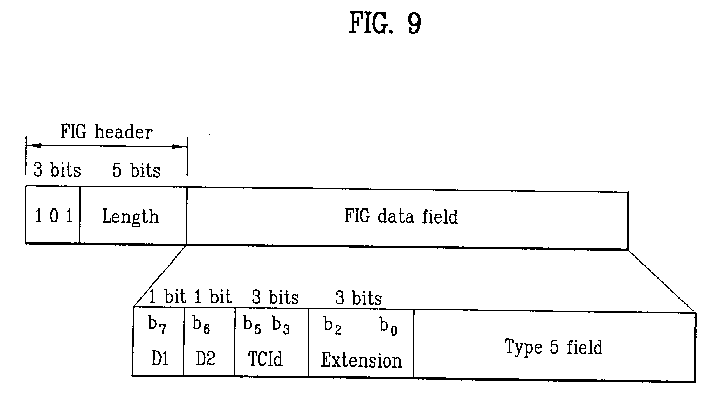

Figure 9 is a configuration diagram of a FIDC according to the present invention. Referring to Figure 9, 3 bits of a "TCId" field and 3 bits of an extension field are indicative of an "FIDCId" of the "FIG Type 0 field for extension 2" (0/2) field. Therefore, using this information, the FIC decoder can filter only an FIDC equal to the FIDCId, and does not filter the remaining FIDC(s).

If the MSC data is equal to a sub-channel ID recognized by decoding the field "FIG type 0 field for extension 2" (0/2), that MSC data is filtered, such that the filtered result is transmitted to a corresponding component block.

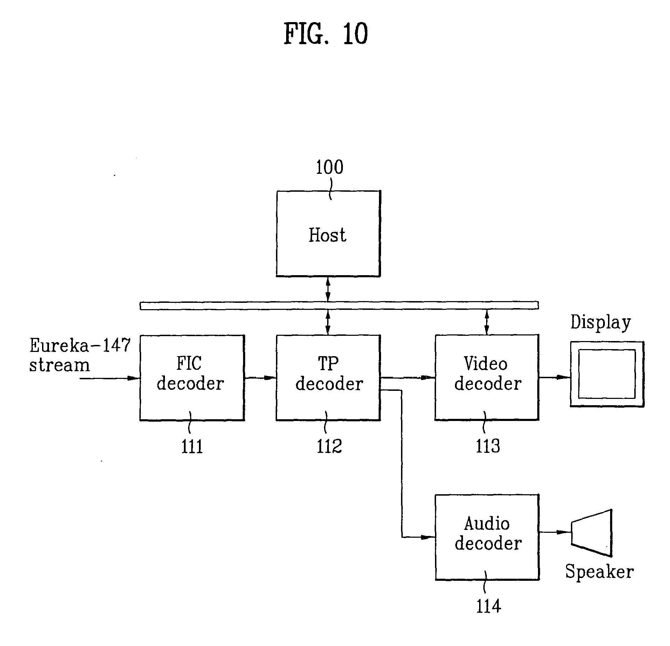

Figure 10 is a block diagram illustrating a DMB receiver according to the present invention. The method of Figure 4 is implemented by the DMB receiver of Figure 10, but can be implemented by other suitable device or system. All the components of the DMB receiver are operatively coupled.

Referring to Figure 10, upon receiving a Eureka-147 stream, an FIC decoder 111 filters only service components contained in a user-selected service using MCI received via the above-mentioned FIG 0/1, 0/2, 0/3, and 0/4 fields of the FIB contained in the FIC. The FIC decoder 111 transmits the filtered service components to a host 100 according to individual data types, or transmits them to a TP decoder 112. If video data and audio data are included in the service components, the TP decoder 112 separates the video data from the audio data, outputs the video data to a video decoder 113, and outputs the audio data to an audio decoder 114. The results of the video decoder 113 and the audio decoder 114 are appropriately output, e.g., through a display and a speaker, respectively. If only one of the video data and the audio data is present in the service components, the TP decoder 112 outputs the present data to a corresponding decoder. For example, if an audio signal is only present in the service components, the TP decoder 112 outputs the audio signal to the audio decoder 114.

It should be noted that most terminology disclosed in the present invention is defined in consideration of functions of the present invention, and can be differently determined according to intention of those skilled in the art or usual practices. Therefore, it is preferable that the above-mentioned terminology be understood on the basis of all contents disclosed in the present invention.

The present invention has been disclosed in the above-mentioned preferred embodiments, such that those skilled in the art may easily modify the above-mentioned preferred embodiments according to technical scope and difficulty of the present invention. Therefore, it should be understood that other preferred embodiments and modification based on technical contents of the present invention belong to the scope of the appended claims of the present invention.

As apparent from the above description, a mobile broadcast receiver and a method for decoding a broadcast service according to the present invention do not decode all information associated with an ensemble composed of a plurality of services in an FIC decoder of a DMB receiver, but decode only information associated with a user-desired service, such that the FIC decoder can easily and quickly extract service components.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile broadcast receiver comprising:
a receiver to receive a fast information channel (FIC) and a main service channel (MSC); and
an FIC decoder to analyze fast information group (FIG) information of a fast information block (FIB) contained in the FIC, to extract information associated with a user-selected service and information associated with at least one service component of the user-selected service, and to filter only the at least one service component of the user-selected service based on the extracted information.

2. The mobile broadcast receiver according to claim 1, wherein the at least one service component includes individual sub-channels of the MSC and a fast information data channel (FIDC) of the FIC.

3. The mobile broadcast receiver according to claim 1, wherein the FIC decoder analyzes multiplex configuration information (MCI) contained in at least one FIG type 0 field of the FIG information, and thereby extracts the information associated with the user-selected service and the information associated with the at least one service component of the user-selected service.

4. The mobile broadcast receiver according to claim 3, wherein the at least one FIG type 0 field includes a 'FIG type 0 field for extension 1' field, a 'FIG type 0 field for extension 2' field, a 'FIG type 0 field for extension 3' field, and a 'FIG type 0 field for extension 4' field.

5. The mobile broadcast receiver according to claim 4, wherein the FIC decoder decodes the 'FIG type 0 field for extension 1' field to analyze a user-selected sub-channel structure on the basis of the decoded result, and decodes the 'FIG type 0 field for extension 2' field to analyze a user-selected service structure on the basis of the decoded result.

6. The mobile broadcast receiver according to claim 4, wherein the FIC decoder decodes only information of a service component contained in the user-selected service by examining the 'FIG type 0 field for extension 3' field, when a service component transmission is performed under a packet mode.

7. The mobile broadcast receiver according to claim 4, wherein the FIC decoder decodes only information of a service component contained in the user-selected service by examining the 'FIG type 0 field for extension 4' field, when a service component transmission is performed under a stream mode.

8. The mobile broadcast receiver according to claim 4, wherein the FIC decoder filters only the user-selected service among a fast information data channel (FIDC) of the FIB contained in the FIC using the decoded results of the fields 'FIG type 0 field for extension 1' ~ 'FIG type 0 field for extension 4', and filters only a sub-channel contained in the user-selected service among individual sub-channels of the MSC.

9. The mobile broadcast receiver according to claim 1, wherein the FIG information includes a FIDC (fast information data channel) identification field for identifying a FIDC associated with the user-selected service, and based on the FIDC identification field, the FIC decoder filters only the FIDC corresponding to the FIDC identification field.

10. A method for decoding a broadcast service of a mobile broadcast receiver, which receives a fast information channel (FIC) and a main service channel (MSC), the method comprising:
(a) analyzing fast information group (FIG) information of a fast information block (FIB) contained in the FIC, and extracting information associated with a user-selected service and information associated with at least one service component of the user-selected service; and
(b) filtering only the at least one service component of the user-selected service based on the extracted information.

11. The method according to claim 10, wherein the at least one service component includes individual sub-channels of the MSC and a fast information data channel (FIDC) of the FIC.

12. The method according to claim 10, wherein the step (a) includes:
analyzing multiplex configuration information (MCI) contained in at least one FIG type 0 field of the FIG information, and thereby extracting the information associated with the user-selected service and the information associated with the at least one service component of the user-selected service.

13. The method according to claim 12, wherein the at least one FIG type 0 field includes a 'FIG type 0 field for extension 1' field, a 'FIG type 0 field for extension 2' field, a 'FIG type 0 field for extension 3' field, and a 'FIG type 0 field for extension 4' field.

14. The method according to claim 13, wherein the step (a) includes:
(a1) decoding the 'FIG type 0 field for extension 1' field to analyze a user-selected sub-channel structure on the basis of that decoded result, and
(a2) decoding the 'FIG type 0 field for extension 2' field to analyze a user-selected service structure on the basis of that decoded result.

15. The method according to claim 14, wherein the step (a1) decodes the 'FIG type 0 field for extension 1' field and thereby detects a variety information of the user-selected service component including a unique number, a start position in the MSC, and size information.

16. The method according to claim 14, wherein the step (a2) decodes the 'FIG type 0 field for extension 2' field and thereby detects a number of service components associated with the user-selected service and data type information of those service components.

17. The method according to claim 13, wherein the step (a) includes:
if a service component transmission is performed in a packet mode, decoding only information of a service component contained in the user-selected service by examining the 'FIG type 0 field for extension 3' field.

18. The method according to claim 13, wherein the step (a) includes:
if a service component transmission is performed in a stream mode, decoding only information of a service component contained in the user-selected service by examining the 'FIG type 0 field for extension 4' field.

19. The method according to claim 13, wherein the step (b) includes:
filtering only the user-selected service among a fast information data channel (FIDC) of the FIB contained in the FIC using the decoded results of the fields 'FIG type 0 field for extension 1' ~ 'FIG type 0 field for extension 4', and
filtering only a sub-channel contained in the user-selected service among individual sub-channels of the MSC.

20. The method according to claim 10, wherein the FIG information includes a FIDC (fast information data channel) identification field for identifying a FIDC associated with the user-selected service, and the step (b) includes filtering only the FIDC corresponding to the FIDC identification field.
